# EUROPEAN PATENT APPLICATION

(11) **EP 2 326 115 A1**
(43) Date of publication of application: **25.05.2011**
(21) Application number: 09812670.9
(22) Date of filing: 10.09.2009
(51) Int. Cl.: H04W 16/00

(54) **METHOD, DEVICE AND BASE STATION FOR FREQUENCY BAND ALLOCATION**

(30) Priority: 10.09.2008 CN 200810198462
(71) Applicant: Huawei Technologies Co., Ltd., Longgang District, Shenzhen Guangdong 518129 (CN)
(72) Inventor: ZHOU, Guohua, Shenzhen Guangdong 518129 (CN)
(74) Representative: Körber, Martin Hans
(86) International application number: PCT/CN2009/073865
(87) International publication number: WO 2010/028604

(57) **Abstract**

A method, apparatus and base station for frequency band allocation are provided. The method includes: obtaining a cell load of a cell; and allocating a frequency band range of a cell edge of the cell according to the cell load. A corresponding apparatus and a corresponding base station are also provided. Therefore, quality of service (QoS) for users both in a central area of the cell and at the cell edge can be satisfied.

## Description

This application claims priority to Chinese Patent Application No. 200810198462.3, filed with the Chinese Patent Office on September 10, 2008 and entitled "METHOD, DEVICE AND BASE STATION FOR FREQUENCY BAND ALLOCATION", which is incorporated herein by reference in its entirety.

### FIELD OF THE INVENTION

The present invention relates to the field of mobile communication applications, and in particular, to a method, apparatus and base station for frequency band allocation.

### BACKGROUND OF THE INVENTION

A physical layer of a long term evolution (LTE) system adopts an orthogonal frequency division multiplexing (OFDM) technology, and each cell uses all available bandwidths. Signals at a cell edge are weaker, and users at the cell edge need a larger transmission power, which causes great interference to adjacent cells. Further, the users at the cell edge are closer to the adjacent cells, and are more easily subject to downlink interference of users and base stations in the adjacent cells. Therefore, if the adjacent cells use the same frequency band at cell edge, great inter-cell interference will be caused. For pilots and control channels, the LTE system performs inter-cell interference randomization by using different code words, so that the inter-cell interference has no great impact on the pilots and control channels. However, for shared channels, in order to improve the system performance, the inter-cell interference must be reduced through coordination of time frequency resources used by users at inter-cell edge and through power control.

In terms of downlink interference coordination, currently, frequency resources for a cell center and frequency resources for a cell edge are differentiated by means of a soft frequency multiplexing concept, so that adjacent cells use carriers in different frequency layers at the edges thereof, to eliminate the interference at the cell edge.

Inter-cell line interference is closely related to user distribution. A certain edge user greatly interferes with one cell edge of a serving cell thereof, but may slightly interfere with another adjacent cell of the serving cell; therefore, line interference coordination requires that adjacent cells are determined with respect to different edge users, based on which corresponding operations are performed. To realize an interference coordination policy based on the soft frequency multiplexing concept, high interference indication (HII) and overload indication (OI) message are defined during the implementation, and information is transferred between cells through the defined messages.

A cell transmits information to different adjacent cells through an HII message, and informs its adjacent cells which physical resource blocks (PRBs) of the cell are easily subject to interference, that is, resources for a cell edge of the cell. Each PRB corresponds to a bitmap for identifying the performance of the PRB. If the value of the bitmap is "0", that is, the PRB is not a high interference PRB, adj acent cells can use the PRB at their own edges; and if the value of the bitmap is "1 ", that is, the PRB is a high interference PRB, the adjacent cells had better not schedule the PRB at the edges. A cell sends information to all adjacent cells through an OI message, and informs the adjacent cells of the degree of interference that the PRB of the cell is subject to, and the degree of interference that the PRB of the cell is subject to is divided into a high level, a middle level, and a low level. Through interaction of the two messages, the cells can determine the distribution of frequency band resources of the opposite party, so as to achieve multiplexing of the frequency resources between the cells and to avoid the inter-cell interference as much as possible.

The cell informs the adjacent cells of PRBs for the cell edge and PRBs for the cell center through HII information, so as to stagger PRB resources used at the edge from the adjacent cells. When the PRBs at the edge are insufficient for use and the resource interference in the cell is increased, transfer of HII message is triggered once again and allocation of the PRBs at the edge is increased; on the contrary, the allocation of the PRBs is reduced at the edge.

During the implementation of the present invention, the inventor finds that, if too many frequency band resources are used at an edge during the allocation, it may definitely result in that quality of service (QoS) for users of the cell center cannot be ensured, and if too many frequency band resources of the cell are used at the edge, frequency band resources of its adjacent cells available for edges may be fewer, which cannot achieve the optimal frequency band allocation.

### SUMMARY OF THE INVENTION

The present invention is directed to a method, apparatus and base station for frequency band allocation, so as to improve the QoS for users.

A method for frequency band allocation is provided, which includes: obtaining a cell load of a cell, in which the cell load includes a load of a cell edge of the cell; and allocating a frequency band usage range of the cell edge of the cell according to the cell load.

An apparatus is provided, which includes: an obtaining unit, configured to obtain a cell load of a cell, in which the cell load includes a load of a cell edge of the cell; and a frequency band allocating unit, configured to allocate a frequency band usage range of the cell edge of the cell according to the cell load obtained by the obtaining unit.

A base station is provided, in which the base station includes the apparatus according to any one of claims 6 to 8.

A computer readable storage medium, configured to store a computer program code, is provided, in which when the computer program code is run by a computer, the computer program code enables the computer to execute the method according to any one of claims 1 to 5.

According to the present invention, a frequency band usage range is dynamically allocated for a cell edge according to a cell load, so that not too many frequency band resources are applied at the cell edge, and the QoS for users both in the central area of the cell and at the cell edge can be satisfied.

### BRIEF DESCRIPTION OF THE DRAWINGS

FIG. 1 is a network system diagram according to an embodiment of the present invention;
FIG. 2 is a diagram of a position relation between a cell edge and a central area divided in a cell according to an embodiment of the present invention;
FIG. 3 is a flowchart of frequency band allocation according to an embodiment of the present invention;
FIG. 4 is a specific flowchart of the frequency band allocation according to an embodiment of the present invention;
FIG. 5 is a schematic structural view of an apparatus according to an embodiment of the present invention; and
FIG. 6 is another schematic structural view of the apparatus according to an embodiment of the present invention.

### DETAILED DESCRIPTION OF THE EMBODIMENTS

In the embodiments of the present invention, a certain number of frequency points are configured for a cell edge of a cell, which assists a base station to specify an available frequency band range when allocating edge frequency bands, so as to avoid negative impacts on the system performance.

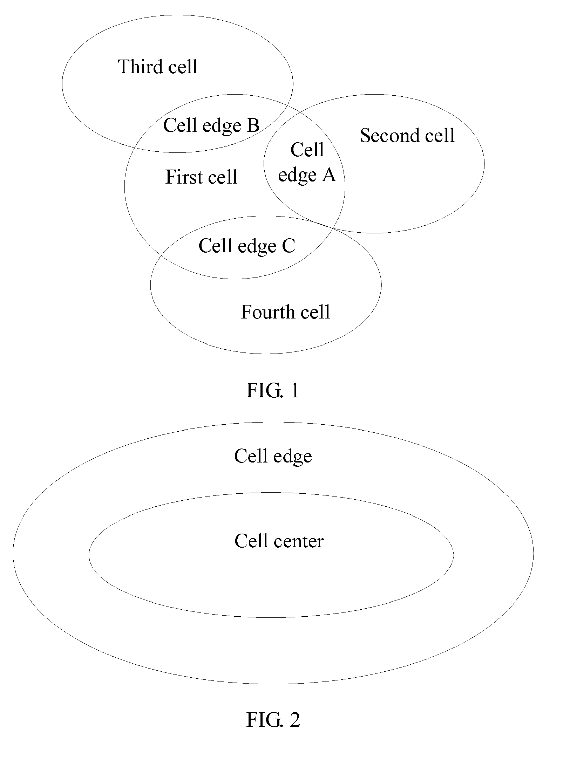

A network system according to an embodiment of the present invention includes a plurality of cells, and distribution conditions of respective cell edges are as shown in FIG. 1. Referring to FIG. 1, four cells, that is, a first cell, a second cell, a third cell, and a fourth cell, are illustrated. The cells may be located in the same base station, or may be located in different base stations. Generally, a part of a cell edge is overlapped with a part of an adjacent cell, for example, the first cell and the second cell form a cell edge A, the first cell and the third cell form a cell edge B, and the first cell and the fourth cell form a cell edge C, and hereinafter, the cell edge A, the cell edge B, and the cell edge C are sub-cell edges of the first cell, that is, a cell edge is composed of sub-cell edges.

A frequency band usage range of a cell edge is configured in each cell, and the first cell is mainly taken as an example for illustration. FIG. 2 shows a relation between a cell edge and a central area in the first cell, in which areas of the first cell are divided into a cell edge and a cell center. A certain number of frequency band utilization rates are set for the cell edge in the cell, by configuring a fixed frequency band, for example, a fixed frequency band that is fully used at the cell edge, or by setting a threshold, which is a proportional number, that is, a proportion of a frequency used by the cell edge in a total frequency band of the cell. The frequency band configured for the cell edge is configured during initial construction of a base station, or initially configured when a frequency band is allocated to the cell. During the specific implementation, a frequency band is reconfigured according to comparison between a load of a cell edge and a total cell load.

The implementation of the method in the embodiment of the present invention is described below with reference to system diagrams of FIGs. 1 and 2, and FIG. 3 is a first flowchart of frequency band allocation according to an embodiment of the present invention, which includes the following specific steps.

Step S301: A cell load of a first cell is obtained.

Step S302: A frequency band of a cell edge of the first cell is allocated according to the cell load.

Through the implementation of the method, a frequency band usage range of a cell edge can be controlled according to a state of a load of a cell edge, so as to satisfy frequency band usage at a central area and a cell edge in a cell, so that the QoS in the cell reaches optimum.

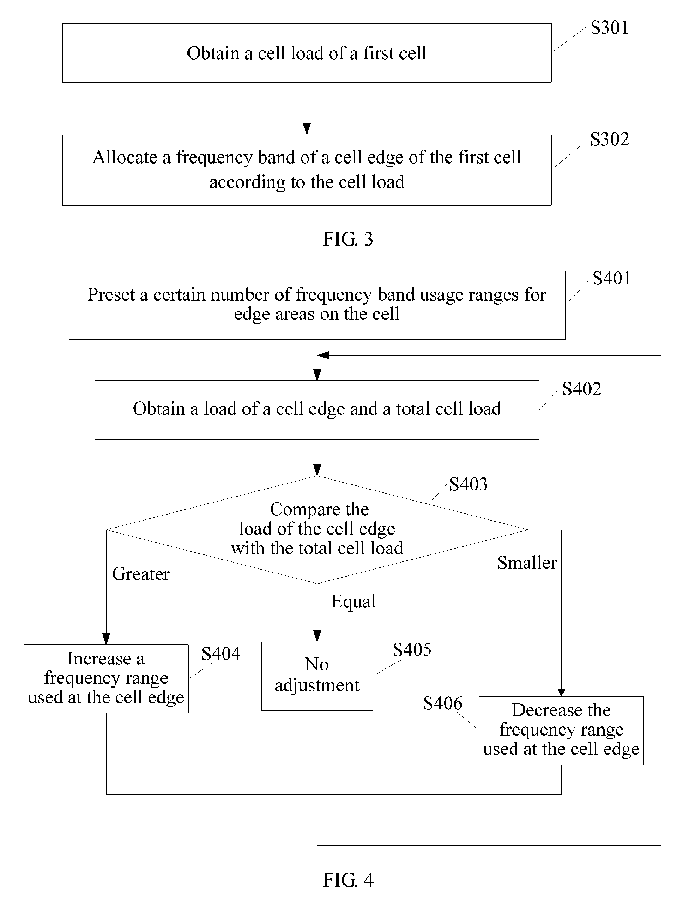

FIG. 4 is a specific flowchart of the frequency band allocation according to an embodiment of the present invention. An initial frequency band range is allocated to the cell edge of the cell at the beginning. In use, it is necessary to optimize a usage range of the edge frequency band in combination with a relation between the total cell load and the load of the cell edge, and the following specific steps are included.

Step S401: A certain number of frequency band usage ranges are preset for edge areas on the cell.

This embodiment is described below in combination with the first cell. When frequency bands are initially configured for cell edges of the first cell, a frequency band 1, a frequency band 2, and a frequency band 3 are allocated to a sub-cell edge A, a frequency band 4 and a frequency band 5 are allocated to a sub-cell edge B, and a frequency band 6 is allocated to a sub-cell edge C. Similarly, when allocating the frequency band for the cell edge, each cell configures a frequency band usage range for the cell edge of each sub-cell. In specific implementation, a threshold is further set according to allocation of a total frequency band used by a cell, that is, a constraint proportion, namely, a part of the total frequency band allocated to a cell edge, for example, if the threshold in the first cell is 0.5, the cell edge of the cell can only use half of the total frequency band of the cell. When the frequency band of the cell edge is up to half of the total frequency band of the cell, the cell will no longer provide more usage frequency bands for users at the cell edge so as to ensure the QoS for users in the central area.

The frequency band usage range of the cell edge configured in this embodiment is an initially configured value, and may not be an optimal value. Therefore, it is necessary to further optimize the frequency band usage range of the cell edge in combination with the relation between the load of the cell edge and the total cell load.

Step S402: The load of the cell edge and the total cell load are obtained.

In this embodiment, the load of the cell edge and the total cell load can be obtained by setting a timer to detect and calculate the state of the load of the cell edge and the state of the total cell load when a set timing time is reached; or when a state base station finds that an edge interference of a certain cell exceeds a preset threshold, it is necessary to reallocate a frequency usage range to satisfy system demands, and statistics on the state of the load of the cell edge and the state of the load of the cell are triggered, in which the preset threshold of the cell edge interference can be set according to specific system demands, to which the embodiments of the present invention make no specific limitations.

The state of the total cell load is generally represented through PRB utilization rates in the cell, and it is necessary to make statistics on load information about uplinks with respect to inter-cell interference coordination only for the uplinks. The state of the total cell load can be finally measured with a normalized value. Utilization rates of PRBs allocated at the cell edge of the cell by the cell may be used to make statistics on the state of the load of the cell edge. The PRBs are PRBs in the cell, which can be specifically measured according to utilization rates of PRBs of the frequency bands 1, 2, 3, 4, 5, and 6 in the first cell. The load of the cell edge can be measured by obtaining a normalized value with the same method. After the state of the total cell load and the state of the load of the cell edge are measured according to the two normalized values, comparison between the loads may be performed.

Step 5403: The load of the cell edge and the total cell load are compared.

In this embodiment, if the load of the cell edge is greater than the total cell load, Step S404 is performed; if the load of the cell edge is equal to the total cell load, Step S405 is performed; and if the load of the cell edge is smaller than the total cell load, Step S406 is performed.

Step 5404: A frequency range that can be used at the cell edge is increased.

In this embodiment, when only fixed usage frequency bands are allocated, more usage frequency bands can be allocated to the cell edge; in the case of performing constraint using a threshold, the threshold can be increased to expand the frequency band usage range of the cell edge.

Step S405: The frequency range that can be used at the cell edge is not adjusted.

Step S406: The frequency range that can be used at the cell edge is decreased.

In this embodiment, when only fixed usage frequency bands are allocated, fewer usage frequency bands can be allocated to the cell edge; in the case of performing constraint using a threshold, the threshold can be reduced to narrow the frequency band usage range of the cell edge of the cell.

The allocation in Steps S404 and S406 can be determined by taking one or more PRBs as an adjustment step mainly according to a difference between the load of the cell edge and the total cell load. After the frequency band usage range is reallocated, edge frequency bands used in the first cell and respective adjacent cells are coordinated within a new usage range, and the overall performance of the cell may not be affected during adjustment of the frequency band of the cell edge.

It should be noted that, a highest threshold and a lowest threshold of the adjustment can be set during the adjustment of the frequency band of the cell edge. The highest threshold is provided to constrain infinite increase, and the lower threshold is provided to constrain infinite decrease, that is, when the highest threshold or the lowest threshold has been reached during the adjustment, the allocated frequency band range may no longer be increased or decreased for the edge areas, so as to ensure the QoS of the central area.

It should be noted that, if the cell is only divided into a cell edge and a central area, the frequency band usage range of the central area may also be allocated according to the state of the load of the cell edge, so as to make the central area conform to the defined usage range, thereby satisfying the requirements of the QoS of the system. In the specific implementation, the state of the load of the central area may also be obtained, frequency band allocation is performed on the cell edge by comparing the state of the load of the central area and the state of the load of the cell edge, and the specific allocation method is similar to the method for allocating the frequency band usage range of the cell edge according to the load of the cell edge and the total cell load, which is not repeated herein.

Preferably, according to this embodiment of the present invention, after the frequency usage range of the cell edge is determined, frequency usage ranges of respective sub-cell edges can be coordinated within the range of the cell edge when interference of the respective sub-cell edges is changed. In this case, the embodiment of the present invention further includes: coordinating frequency band usage conditions of respective edge areas according to the allocated frequency band usage range. Specifically, in the process of providing services for users in the cell edge, the first cell and respective adjacent cells exchange information through HII, so that the cells can obtain information about the frequency band used at respective cell edges. When the distribution of the users in the cell edge is changed in different areas, the edge frequency band resources used by respective sub-cell edges can be reallocated. The allocation is only performed within the frequency band range of the cell edge, and a corresponding adjacent cell needs to be notified through an HII message when the allocation is performed. For example, if edge users of the sub-cell edge C are increased, interference is increased, and allocation of edge frequency bands needs to be increased; while if edge users of the sub-cell edge A are few, the interference is small, and at this time, frequency band resources allocated to the sub-cell edge A can be used by the cell edge C, for example, the frequency band 1 is allocated to the sub-cell edge C. Herein, the first cell also needs to send an HII message to notify the second cell and the fourth cell of a new frequency band usage range of respective sub-cell edges.

In this manner, in each edge area, a frequency band usage range of a sub-cell edge is adjusted in the allocated frequency band usage range, and frequency band usage conditions between the cell edges are coordinated, so that the frequency band resources allocated to the cell edge are used more rationally, which satisfies demands of users in the edge area, and also improves the QoS of the cell edge.

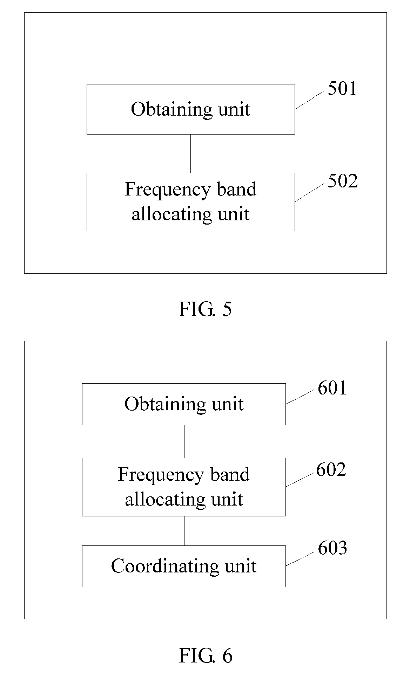

Correspondingly, FIG. 5 is a schematic structural view of an apparatus according to an embodiment of the present invention. The apparatus includes an obtaining unit 501 and a frequency band allocating unit 502. The obtaining unit 501 is configured to obtain a cell load, in which the cell load includes a load of a cell edge and a total cell load, or a load of a cell edge and a cell central area load. The frequency band allocating unit 502 is configured to allocate a frequency band range of the cell edge of the cell according to the cell load obtained by the obtaining unit 501.

According to the apparatus, a certain frequency band usage quota is configured for a cell edge of a cell according to a load of the cell edge of each cell, which specifies an available frequency usage range of the cell edge, and the cell provides services for user equipments (UEs) of the cell edge by using the configured frequency band usage quota at the cell edge, so that the QoS for users both in the central area of the cell and at the cell edge is satisfied. Through limitation to the configured frequency band usage quota, there may not be excessive resources applied at the cell edge, so that the frequency band resource configuration of the adjacent cells at the edge can be satisfied. The apparatus may be a base station, a base station controller, or other apparatus configured to manage frequency band resources of a cell.

Specifically, an embodiment of the present invention further provides another structure of the apparatus as shown in FIG. 6, which includes an obtaining unit 601, a frequency band allocating unit 602, and a coordinating unit 603.

The obtaining unit 601 is configured to obtain a cell load, in which the cell load may be specifically a load of a cell edge and a total cell load, or a load of a cell edge and a cell central area load; and the obtaining method may be: obtaining the cell load periodically, or obtaining the cell load when cell edge interference exceeds a preset threshold. Specifically, the obtaining unit 601 is configured to obtain the cell load according to a utilization rate of a PRB.

The frequency band allocating unit 602 is configured to allocate a frequency band usage range allocated to a cell edge according to information about the cell load obtained by the obtaining unit 601. Specifically, the frequency band allocating unit 602 is configured to increase the frequency band usage range allocated to the cell edge of the cell when the load of the cell edge obtained by the obtaining unit 601 is greater than the total cell load or the cell central area load, and is further configured to decrease the frequency band usage range allocated to the cell edge of the cell when the load of the cell edge obtained by the obtaining unit 601 is smaller than the total cell load or the cell central area load. If the load of the cell edge obtained by the obtaining unit 601 is equal to the total cell load or the cell central area load, it is unnecessary to adjust the frequency band range of the load of the cell edge. The obtaining unit 601 is further configured to obtain HII information of respective sub-cell edges sent by each adjacent cell of the cell edge.

The coordinating unit 603 is configured to coordinate frequency band ranges of the respective sub-cell edges within the frequency band range allocated by the frequency band allocating unit according to the HII information obtained by the obtaining unit 601. Specifically, the cells where the respective sub-cell edges are located exchange the HII information of the respective sub-cell edges, in which the cell edge includes the respective sub-cell edges, the frequency band ranges of the respective sub-cell edges are coordinated within the frequency band range of the cell edge according to the exchanged HII information, and when the exchanged HII information indicates that interference of the sub-cell edge is increased, the frequency band ranges of the respective sub-cell edges are increased within the frequency band range of the cell edge.

An embodiment of the present invention provides a base station including the above apparatus.

In view of the above, a certain frequency band usage quota is configured for the cell edge of each cell according to the load of the cell edge of the cell, which specifies an available frequency usage range of the cell edge, and the cell provides services for UEs of the cell edge by using the configured frequency band usage quota at the cell edge, so that the QoS for users both in the central area of the cell and at the cell edge is satisfied. Through limitation to the configured frequency, there may not be excessive resources applied at the cell edge, so that the frequency band resource configuration of the adjacent cells at the edge can be satisfied. Within the range of a cell edge, services can be provided to users by coordinating frequencies allocated to cell edges of the cell and the adj acent cells, so as to avoid deterioration of the interference coordination effect caused by blind adjustment; therefore, scheduling of edge frequency resources is more flexible and rational, and the efficiency of the inter-cell interference coordination is improved in the case of change of the users at the cell edge.

Through the above descriptions of the embodiments, it is apparent to persons skilled in the art that, the present invention may be accomplished by hardware, and definitely may also be accomplished by software in combination with a necessary universal hardware platform. Therefore, the technical solutions of the present invention can be substantially embodied in a form of a software product. The software product may be stored in a computer readable storage medium (such as a CD-ROM, U disk, or mobile hard disk), and contain several instructions to instruct computer equipment (for example, a personal computer, server, or network equipment) to perform the method as described in the embodiments of the present invention.

Although the present invention is described above with some preferred embodiments, the scope thereof is not limited thereby. Various variations or replacements that can be easily thought of by persons skilled in the art without departing from the technical scope of the present invention shall fall within the scope of the present invention. Therefore, the protection scope of the present invention shall fall within the scope defined by the appended claims.

## Claims

1. A method for frequency band allocation, comprising:
obtaining a cell load of a cell, wherein the cell load comprises a load of a cell edge of the cell; and
allocating a frequency band usage range of the cell edge of the cell according to the cell load.

2. The method according to claim 1, wherein the cell load further comprises:
a total cell load of the cell; or
a cell center area load of the cell.

3. The method according to claim 1 or 2, wherein the obtaining the cell load further comprises:
obtaining the cell load periodically; or
obtaining the cell load when interference at the cell edge of the cell exceeds a preset threshold.

4. The method according to claim 3, wherein the allocating the frequency band usage range of the cell edge of the cell according to the cell load comprises:
increasing the frequency band usage range of the cell edge when the load of the cell edge is greater than the total cell load or the cell central area load; or
not adjusting the frequency band usage range of the cell edge when the load of the cell edge is equal to the total cell load or the cell central area load; or
decreasing the frequency band usage range of the cell edge when the load of the cell edge is smaller than the total cell load or the cell central area load.

5. The method according to any one of claim 4, further comprising:
exchanging, by the cell and each adjacent cell of the cell edge, high interference indication, HII, information of respective sub-cell edges, the cell edge comprising the sub-cell edges; and
coordinating frequency band usage ranges of the respective sub-cell edges within the frequency band usage range of the cell edge according to the HII information.

6. An apparatus, comprising:
an obtaining unit, configured to obtain a cell load of a cell, wherein the cell load comprises a load of a cell edge of the cell; and
a frequency band allocating unit, configured to allocate a frequency band usage range of the cell edge of the cell according to the cell load obtained by the obtaining unit.

7. The apparatus according to claim 6, wherein the obtaining unit is further configured to obtain a total cell load of the cell; or is further configured to obtain a cell central area load of the cell.

8. The apparatus according to claim 7, wherein the frequency band allocating unit is further configured to increase the frequency band usage range allocated to the cell edge of the cell when the load of the cell edge obtained by the obtaining unit is greater than the total cell load or the cell central area load, and is further configured to decrease the frequency band usage range allocated to the cell edge of the cell when the load of the cell edge obtained by the obtaining unit is smaller than the total cell load or the cell central area load.

9. The apparatus according to any one of claims 6 to 8, wherein the obtaining unit is further configured to obtain high interference indication, HII, information of respective sub-cell edges sent by each adjacent cell of the cell edge, the cell edge comprising the sub-cell edges; and
the apparatus further comprises: a coordinating unit, configured to coordinate frequency band usage ranges of the respective sub-cell edges within the frequency band usage range of the cell edge allocated by the frequency band allocating unit according to the HII information obtained by the obtaining unit.

10. A base station, comprising the apparatus according to any one of claims 6 to 8.

11. A computer readable storage medium, configured to store a computer program code, wherein when the computer program code is run by a computer, the computer program code enables the computer to execute the method according to any one of claims 1 to 5.
